# EUROPEAN PATENT SPECIFICATION

(11) **EP 1 115 667 B1**
(45) Date of publication and mention of the grant of the patent: **26.03.2003**
(21) Application number: 99944717.0
(22) Date of filing: 09.09.1999
(51) Int. Cl.: C03B 37/10, C03B 37/16, C04B 14/42, C08K 3/40, D21B 1/04, D21B 1/06, B02C 13/00, B02C 13/26

(54) **IMPROVEMENTS IN OR RELATING TO GLASS FIBRE**
VERBESSERUNGEN IN BEZIEHUNG ZU GLASFASERN
AMELIORATIONS RELATIVES A LA FIBRE DE VERRE

(30) Priority: 12.09.1998 GB 9819800; 19.05.1999 GB 9911536; 28.07.1999 GB 9917587
(43) Date of publication of application: 18.07.2001
(73) Proprietor: Asset Associates Limited, Aberdeen AB15 4ZT (GB)
(72) Inventor: ERSKINE, William, Robertson, Cunningham, Near Aboyne Aberdeenshire AB34 4TT (GB)
(74) Representative: Matthews, Heather Clare
(86) International application number: GB9902993
(87) International publication number: WO00015568

(56) References cited:
- WO-A-98/19973
- WO-A-99/54536
- GB-A- 2 062 497
- US-A- 2 830 772
- US-A- 4 145 202
- US-A- 5 772 126

## Description

### Field of the Invention

This invention relates to glass fibre material and concerns a novel form of glass fibre material and products including the material. For brevity, glass fibre material may be referred to herein as glass fibre.

### Background to the Invention

The production of glass fibre is described in detail in K. Lowenstein, The Manufacturing Technology of Glass Fibre (3^{rd} edition, 1993). Briefly glass fibre is made from a melt of materials generally comprising mainly silica (eg in the form of sand) with various fluxes and stabilisers. Continuous glass fibres are made by the rapid mechanical attenuation of molten drops of glass exuding from nozzles located on the underside of a heated furnace, called a bushing. A bushing is provided with a large number of nozzles, usually 200 or a multiple thereof. Molten glass exudes from each nozzle of the bushing, with the glass from each nozzle being drawn to form a respective individual fine fibre, called a filament. The individual filaments usually have diameters in the range 8 to 25µm, typically about 17µm. The resulting array of filaments passes through a light water spray and then over an applicator which coats the filaments with a protecting and lubricating size or binder material the nature of which depends on desired properties and intended uses of the glass fibre and which usually includes polymeric binding agent eg polyvinyl acetate (PVA). The size-coated filaments are then gathered on a suitably shaped shoe into cohesive bundles, known as strands, with each strand comprising a plurality (eg about 200) of parallel filaments. The strands then pass to the machine causing the attenuation, typically a winder. A winder consists of a rotating cylinder, called a collet, carrying a removable tube onto which the strand is wound. When sufficient strand has been wound onto a collet, the collet is stopped and the package of strand, called a cake, is removed. The winding and strand-collection operation is then restarted.

Glass fibre can be produced in various different types that differ chemically, including A glass (alkali glass), E glass (with good electrical properties), C glass (with chemical resistance), D glass (with higher dielectric properties), S glass and R glass (both with higher modulus and strength than E glass).

In the production of glass fibre, once a melt of material has been established it is most efficient and economical to maintain a continuous flow of glass from the bushings. However, the attenuation process described above is intermittent, being interrupted at intervals for removal of a cake of wound strand (or similar product) from a collet and establishment of a new winding and possibly also being interrupted for other reasons. This inevitably results in waste fibre residues. Pull-down rollers are commonly provided in glass fibre manufacturing equipment, downstream of the gathering shoe, which function to pull coarse fibre strand produced from an idling bushing between completion of one cake and the start of another. The material passing from the rollers is collected for disposal. This material and other waste material arising during manufacture is known as downchute waste or downchute residue. In practice, downchute residues are substantial and can amount to up to 20% by weight of the total output. Disposal of this downchute residue currently presents practical difficulties due to the large quantity and aggressive nature of the material.

Glass fibre strand as produced can be processed in a number of ways, eg to produce rovings consisting of bundles of a few or many parallel strands, yarns made from twisted strands or rovings, mats made from chopped strand, continuous strand, or rovings, fabrics made from rovings or yarns, chopped fibre, milled fibre etc.

There are many applications in which "continuous" long lengths of fibre strands as produced must be reduced in length eg for inclusion with polymers.

A number of methods have been developed by which the required shorter lengths may be achieved.

Knife-edges in various formats can be used, producing so-called chopped strand fibres of various, but generally consistent length, usually between 50 and 3mm. This technique largely maintains the integrity of the fibre bundle of the common roving feedstock, that is, chopped strand is not in the form of monofilaments; see, eg, US-A-4043779.

It is also known to use a variety of mills, generally involving balls or swinging hammers of varying geometry, whereby chopped strand feedstock is degraded by impact and attrition forces which create large volumes of very fine material, leading to very small fibre length, generally between 1.5 and 0.07mm. The considerable force employed in such mills degrades the fibre bundle in the feedstock. Such techniques can have a tendency to split larger diameter fibres, with consequent loss of fibre integrity.

Glass fibre is by its nature a very aggressive material to handle by such methods, giving rise to rapid wear of knife-edges and hammers. This can cause significant contamination of the chopped/milled fibre by metal. In addition significant maintenance costs are incurred through the abrasive wear.

WO-A-98/19973 describes a technique for reducing the amount of downchute waste produced in glass fibre production. When a downstream production interruption occurs, product from the bushings (prior to coating and collection into strands) is diverted and drawn by means of pull rollers to form filaments generally having a diameter in the range 3.5µm to 24µm (p8 lines 7 to 11). The filaments are crushed using one or more double roll crushers that compress and crush the filaments to produce material from which can be separated (after removal of oversize material) a portion stated to have a mean average length of less than about 5mm. The material is lank and flexible, with a propensity to agglomerate, and is capable of being pneumatically transported.

### Summary of the Invention

In one aspect the invention provides glass fibre material in the form of rigid monofilament fibres, at least 50% of the monofilament fibres having an aspect ratio of less than 30.

The term "aspect ratio" means the ratio of length to nominal diameter of an individual monofilament fibre.

Typically at least 80%, 90% or possibly more of the monofilament fibres have an aspect ratio of less than 30.

Generally the average aspect ratio of the monofilament fibres is less than 20, possibly less than 15 or 10.

The term "monofilament fibre" means an individual, separate filament or fibre rather than a fibre bundle or strand. The monofilament fibres are intact across their diameter or width, ie they are not split along their length, so that fibre integrity is maintained.

The monofilament fibres are rigid, ie stiff and non-flexible. The monofilament fibres have a free-flowing characteristic, with no tendency to agglomerate.

Typically at least 30%, 50%, 60%, 70% or more of the monofilament fibres have a diameter greater than about 30µm.

Generally no more than 40%, more usually no more than 25%, 20% or 15% of the monofilament fibres have a diameter less than about 20µm.

Monofilament fibre diameters are typically in the range 10 to 500µm, preferably in the range 20 to 150µm. The monofilament fibres may be of mixed diameter or substantially similar diameter. Fibre diameter is mainly determined by the nature of the feed material from which the fibres are formed, as illustrated below.

In a preferred aspect, the invention provides glass fibre material in the form of rigid monofilament fibres, at least 30% of the monofilament fibres having a diameter greater than about 30µm.

It is possible to regulate monofilament fibre length to some extent during formation, as will be discussed below.

Further, monofilament fibres in accordance with the invention can be classified or sorted, eg using known techniques to produce a batch of monofilament fibres of substantially similar length or having lengths within specified ranges. Alternatively, the monofilament fibres may be of highly variable length.

The monofilament fibres are generally, but not necessarily exclusively, in the form of short lengths, with typically at least 75%, possibly 85% or 95% of the monofilament fibres having a length in the range 0.1 to 6.5mm, possibly 0.3 to 3mm.

The fibres may have the form of regular circular cross-section cylinders, or may be of more irregular form, again depending mainly on the nature of the feed material.

The fibres may be of any type of glass fibre, eg as discussed above.

Monofilament glass fibres in accordance with the invention may be produced from longer lengths of glass fibre by a novel processing technique that involves feeding glass fibre material to apparatus comprising a rotating shaft rigidly carrying external protruberances lacking sharp edges, with an associated screen, that processes the fibre into rigid monofilament fibres at least 30% of the monofilament fibres having a diameter greater than about 30µm, and at least 50% of the monofilament fibres having an aspect ratio of less than 30. Processing in this way creates minimal fines. The necessary level of treatment can be achieved with one pass through the apparatus. The novel processing technique is the subject of a copending application in our name filed on the same day as the present application.

The term "fines" is used to mean small particles each having a diameter greater than or equal to its length. Fines are thus to be distinguished from a fibre, which has a length greater than its diameter, with the length of a fibre generally being several times the diameter, eg at least 2 times the diameter (ie an aspect ratio of at least 2).

The protruberances are conveniently of knob-like form, possibly generally mushroom-like in shape.

Unlike prior art techniques, the novel method involves no cutting, crushing or grinding action, and produces monofilament fibres without significant quantities of fines and without excessive equipment wear and consequent metal contamination.

The processing technique primarily involves a threshing action, with the glass fibre feed being picked up by the shaft and effectively threshold against the screen, causing fracturing of the ends of the feed material to produce pieces which are ejected through the screen apertures. Minimal grinding or impact is involved, unlike in prior art processes. This results in the production of individual monofilament fibres substantially lacking dust or fines.

Good results have been obtained using a modified biomass shredder, having protruberances with a form closely resembling that of the upper shank and head of a countersunk screw (without slot). Each protruberance thus comprises a generally cylindrical shaft or shank, with a frust-conical head, lacking sharp edges.

The feed material of glass fibre may be glass fibre of any type, as discussed above, and should be in the as produced form and in particular should be "unconverted" glass fibre, ie it should not be glass fibre on which any of various known fabrication processes have been carried out to produce material used for conversion into mats etc.

The feed material may be supplied to the shredder in an ordered or regular format, or as a mass of entangled fibres.

The feed material glass fibre may be from any suitable source. One economically attractive and highly suitable source is downchute waste residue resulting from glass fibre production, as discussed above, which may be in the form of an entangled mass of fibres. At present this material is treated as waste which is difficult and costly to dispose of. For example, US-A-4145202 and US-A-5772126 describe complex methods aimed at recycling such material back into the production process. By converting this downchute residue to rigid monofilament fibres in accordance with the invention, what would otherwise be difficult to handle waste material is converted into an easily manageable form that has many uses, to be discussed below.

A preferred approach is therefore the conversion of glass fibre downchute residues to rigid monofilament fibres as defined in accordance with the invention.

In order to produce the highest quality monofilament fibres it is preferred that any extraneous material in the waste stream eg paper, metal etc is removed prior to processing.

The feed material glass fibre need not be waste residue, and could instead be glass fibre as produced, eg diverted deliberately from glass fibre production equipment as in WO-A-98/19973 discussed above, but diverted after coating, with size and formation into strand rather than before such processing as in WO-A-98/19973, or fibre taken directly from a bushing at a suitably reduced degree of attenuation to give material of appropriate diameter.

Processing can be carried out on wet or dry feed material, or mixed wet and dry material .

For example, glass fibre downchute residue as discussed above, while still wet (with water and usually also size) can be directly processed in suitable apparatus, resulting in production of monofilament fibres of the invention, which constitute a product that can be used in a number of ways as will be discussed below.

Dry fibres, eg wet downchute residue that has been dried, can be processed in a similar way, possibly with the addition eg by spraying of a suitable wetting agent, if appropriate.

The wetting agent is preferably a dilute aqueous solution of a surface active agent. Good results have been obtained with ½-1% by volume of the surfactant Alcopol (Alcopol is a Trade Mark) from Allied Colloids. Alcopol is sodium dioctyl sulpho succinate. Other surfactants may be used.

When processing wet but unsized glass fibre residue, it may also be appropriate to add a wetting agent, eg Alcopol.

The wetting agent solution acts as a lubricant, facilitating slip between fibres, and also functions as a coolant.

A further consequence of directly processing wet residues with wetting agent is that during processing the freeing of any size or other coatings from the fibres is aided and these can then be totally removed by an optional washing stage. This obviates the requirement for aggressive thermal treatment employed in the past to burn off size from waste material. Such thermal treatment (eg heating to 500°C) to remove size or other coatings may be appropriate if the material is processed dry or if required to remove any residue coating.

Processing may be followed by washing and drying steps.

For example, after wet processing in suitable apparatus, the resulting mulch material may be conveyed to a washing screen, eg a Thule Rigtech VSM™ shaker screen, for washing and dewatering of the fibres.

Careful control of this stage can result in almost total removal of any original sizing material. For example processed fibres have been analysed showing total carbon concentrations of less than one tenth of one percent from a starting value of 1.5%. Fibres with carbon contents of such low value are readily amenable for recycling into the melt process.

After washing, if required, the product material may be conveyed to a dryer for drying in conventional manner. Suitable dryers include band dryers, disperse phase dryers, rotary dryers and batch dryers.

The monofilament fibres may then be treated with suitable surface treatments for specific applications.

Processing as described above produces short monofilament fibres of mixed length, which can be classified and sorted if desired in known manner, eg by use of mechanical screens or air classifying techniques, to produce fractions of desired fibre length ranges.

The rigid monofilament fibres of the invention are free flowing and so are easy to handle.

The rigid monofilament fibres of the invention have many applications and uses; including the following:
1. As ingredients in composite materials, particularly plastics composites. The rigid monofilament fibres can act to increase flexural modulus of such materials. The fibres may be used in place (totally or in part) of more expensive chopped strand glass fibre or alternative mineral fillers eg talc. The fibres can be mixed into a resin at much higher concentrations than is the case for conventional chopped strand. The fibres exhibit excellent flow properties within the resin and do not exhibit any tendency to ball up in the resin. It is the combined effect of relatively large fibre diameter and small aspect ratio which imparts these characteristics to the fibre, ie the ability to have high loading levels while maintaining excellent flow characteristics. In order to assist coupling between the monofilament fibre, and polymer of the composite a coupling agent can be added if necessary.
2. As a filler material in coating materials. When the rigid monofilament fibres are mixed with suitable liquid coating material, the free-flowing nature of the fibres mean that the mixture can be readily applied, eg by spraying or brushing. The presence of the fibres in coatings can impart anti-slip properties, reflective properties, chemical resistance, impact resistance etc. As a consequence of the physical nature of the rigid monofilament fibres, they remain dispersed in the resin for a considerable period of time, and any settlement is easily redispersed.
3. In cold cast polymeric materials formed in simple moulds, such as polymeric concretes and cements, where the monofilament fibres can act to improve modulus etc.

In a further aspect the invention provides a product comprising rigid monofilament fibres in accordance with the invention.

The invention will now be described, by way of illustration, with reference to the accompanying drawings in which:-
Figure 1 is a schematic side view, partly in section, of fibre processing apparatus;
Figure 2 is a schematic view of the rotating shaft of the apparatus of Figure 1 to an enlarged scale;
Figure 3 is schematic view of one of the protruberances of the shaft of Figure 2 to a further enlarged scale;
Figure 4 is a sectional view of part of the shaft of Figure 2 to an enlarged scale;
Figure 5 shows the screen of the apparatus of Figure 1 to an enlarged scale;
Figure 6 is a flow chart of the process steps involved in treatment of wet glass fibre residue, using the apparatus of Figures 1 to 5;
Figures 7 and 8 are graphs of filament diameter (micron) versus frequency for batches of glass fibre in accordance with the invention, after screening through a 500µm and a 210µm screen, respectively;
Figure 9 is a view similar to Figure 1 of apparatus with a modified screen; and
Figure 10 is a view similar to Figure 5 of the screen of the apparatus of Figure 9.

### Detailed description of the drawings

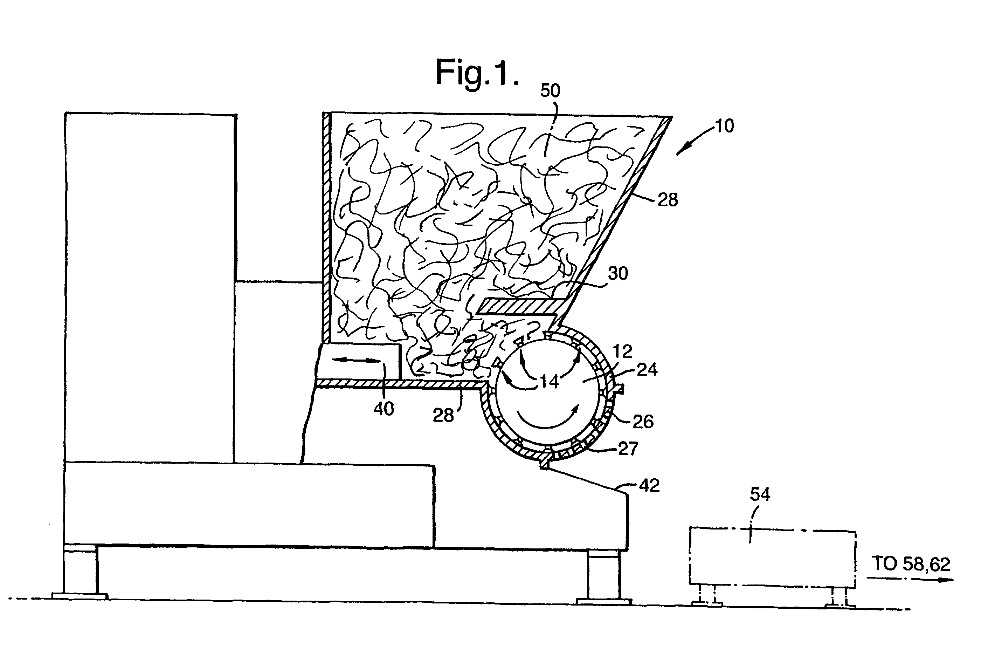

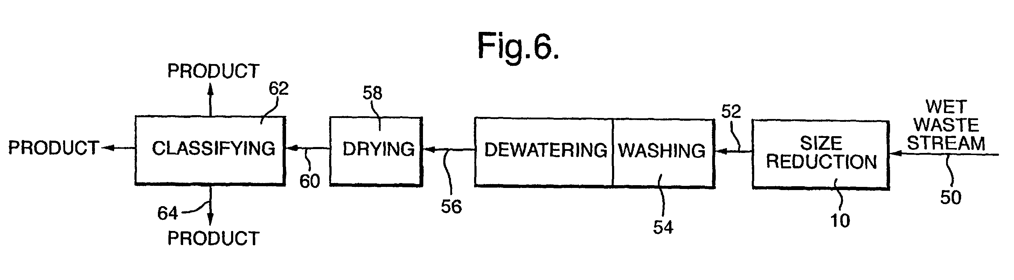

Referring to the drawings, Figures 1 to 5 illustrate processing apparatus 10, and Figure 6 illustrates use of this apparatus for processing a wet waste stream of glass fibre downchute residue, carrying water and binder, collected from various formers and/or bushings of a nearby glass fibre production line (not shown).

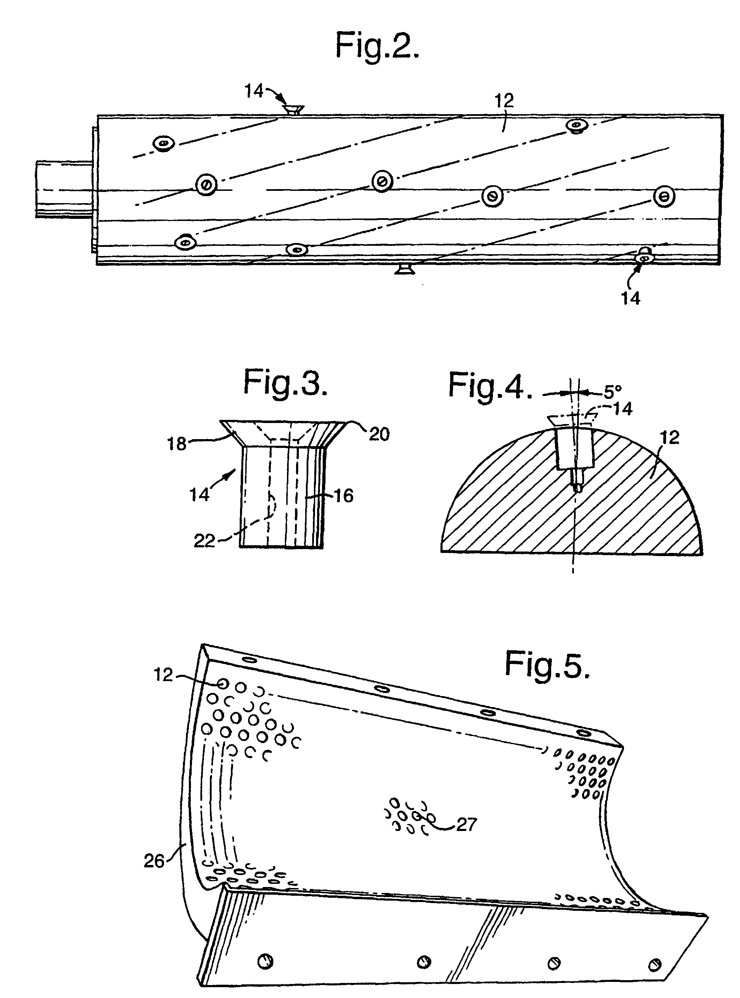

Referring to Figures 1 to 5, the illustrated apparatus 10 is based on a modified biomass shredder known as the Castoro™ model from P.O.R. SpA of Italy. The apparatus comprises a cylindrical steel shaft or drum 12 182mm in diameter and 456mm in length arranged for rotation about a generally horizontal axis. Nineteen similar steel protruberances 14 are secured to the external surface of the shaft 12. The spatial arrangement of the protruberances is designed to create the specific effect required. In particular, the protruberances are positioned to ensure an even feed of fibres to the screen and to prevent any grinding by lateral movement across the screen. Each protruberance is of the form shown in Figure 3, and comprises a generally cylindrical rigid shaft or shank 16 with a frusto-conical head 18 tapering outwardly therefrom. The top circular edge 20 is not sharpened. A central bore 22 extends through the shaft and head, for securing of the protruberance to the shaft 12 by means of a screw (not shown). The protruberances are inclined at an angle of about 5° with respect to the shaft radius, as shown in Figure 4, and extend 10mm from the shaft surface.

The shaft 12 is mounted for rotation under the control of a reversible hydraulic motor (not shown) in a housing 24 via externally mounted waterproof roller bearings (not shown).

A part cylindrical section of the housing 24 is constituted by a screen 26, as shown in Figure 5, which subtends an angle of about 90°, formed of punched perforated mild steel plate with circular apertures 27. Screen 26 is removable and replaceable. Screens with circular apertures 10mm, 15mm, 20mm and 30mm diameter are available.

The spacing or gap between the screen 26 and the upper surface of the protruberances 14 is about 13mm. This comparatively large clearance minimises attrition of the fibres.

The housing 24 includes of funnel-like upper portion or hopper 28 for receiving fibrous material to be processed. The housing includes a horizontally extending containment plate 30 located above the rotatable shaft 12. The horizontal position of plate 30 may be adjustable in a manner not illustrated.

Apparatus 10 further includes a reciprocable hydraulic ram 40 mounted to run along the base of portion 28. An output chute 42 is located below the screen 26, for receiving product after processing.

In use, material 50 to be processed is fed into the top of the apparatus via housing portion 28. Shaft 12 is caused to rotate in an anticlockwise direction as seen in Figure 1 at a speed of about 150 rpm. Ram 40 is caused to reciprocate at an appropriate rate, typically about 6 times per minute, with appropriate limits of travel being determined and set.

The feed material 50 falls down to the bottom of the housing where it is presented to the rotating shaft 12 by the action of the horizontal reciprocating hydraulic ram 40, which acts to apply the necessary pressure to ensure consistent feed to the shaft.

The material is collected by the rotating protruberances 14 of the shaft, with the containment plate 30 acting to retain material in place, maintaining positive feed of material to the rotating shaft and preventing cavitation. The gap between the protruberances and screen enables feed material collected by the protruberances to be dragged down towards the screen on rotation of the shaft. The trailing ends of the fibrous feed material are threshed across the screen causing fracturing of the ends of the material into pieces which are ejected through the screen apertures. No crushing or grinding action is involved.

Initial calibration of variables such as speed of rotation of shaft 12, speed of reciprocation and extent of travel of hydraulic ram 40 and vertical height of containment plate 30 may be required.

During use for processing of wet glass fibre downchute residue, after about 6 to 8 revolutions of the shaft 12, masses of fibre begin to extrude as a mulch through the screen 26, to be passed on chute 42 for further processing.

Figure 6 illustrates use of the apparatus 10 for processing a wet waste stream 50 of glass fibre residue, carrying water and binder. The wet waste stream may comprise downchute residue, as discussed above, or glass fibre deliberately diverted from glass fibre production equipment, downstream of size-coating and strand formation stages. The wet waste stream is fed to apparatus 10, where it is converted from an unmanageable assortment of strands, clumps, hanks, webs and fibres into short lengths of rigid monofilament fibre, at least 30% of the monofilament fibres having a diameter greater than about 30µm and at least 50% of the monofilament fibres having an aspect ratio of less than 30, the material substantially lacking fines. The fibre product is fed via chute 42 (Figure 1), represented by line 52 in Figure 6, to a washing and dewatering apparatus 54 such as by a Thule Rigtech VSM 100™ shaker screen.

After washing and dewatering, the fibres are conveyed via line 56 to a dryer 58, such as a band dryer.

After drying, the material is conveyed via line 60 to classifying apparatus 62 such as a Gough Vibrecon™ Separator, resulting in a number of separate product streams 64 each of different fibre size range, that may be used in a variety of ways as discussed above.

The washing/dewatering stage 54, the drying stage 58 and the classifying stage 62 are all optional.

### Example 1

Experiments were carried out using the apparatus of Figures 1 to 5 for processing of wet E-glass fibre downchute residue, carrying water and PVA binder, with downstream processing including all optional steps of Figure 6. Grading analysis was performed on the final product, obtained using three different screens 26, with circular apertures 10mm, 15mm and 20mm in diameter, respectively. The grading analyses are given below.

| **Grading Analysis (10mm)** | | | |
|---|---|---|---|
| **Sieve Size** | **Mass Retained (g)** | **% Retained** | **% Passing** |
| 6.3 mm | 0.3 | 0.1 | 99.9 |
| 2 mm | 15.1 | 5.3 | 94.6 |
| 1 mm | 34.7 | 12.1 | 32.5 |
| 850 µm | 197.2 | 68.9 | 13.6 |
| 250 µm | 13.8 | 4.8 | 8.8 |
| 180 µm | 16.4 | 5.7 | 3.1 |
| 63 µm | 8.2 | 2.9 | 0.2 |
| <63 µm | 0.4 | 0.1 | - |

| **Grading Analysis (15mm)** | | | |
|---|---|---|---|
| **Sieve Size** | **Mass Retained (g)** | **% Retained** | **% Passing** |
| 6.3 mm | 0.2 | <1.0 | >99.9 |
| 2 mm | 57.9 | 9.5 | 90.5 |
| 1 mm | 73.8 | 12.1 | 78.4 |
| 850 µm | 440.0 | 72.0 | 6.4 |
| 250 µm | 11.4 | 1.9 | 4.5 |
| 180 µm | 19.7 | 3.2 | 1.3 |
| 63 µm | 7.9 | 1.3 | <0.1 |
| <63 µm | 0.2 | <0.1 | - |

| **Grading Analysis (20mm)** | | | |
|---|---|---|---|
| **Sieve Size** | **Mass Retained (g)** | **% Retained** | **% Passing** |
| 6.3 mm | 1.7 | 0.3 | 99.7 |
| 2 mm | 62.9 | 10.9 | 88.8 |
| 1 mm | 74.1 | 12.8 | 76.0 |
| 850 µm | 375.9 | 64.9 | 11.1 |
| 250 µm | 11.8 | 2.0 | 9.1 |
| 180 µm | 34.9 | 6.0 | 3.1 |
| 63 µm | 15.3 | 2.6 | 0.5 |
| <63 µm | 2.3 | 0.4 | - |

It will be seen that generally similar fibre size distribution was obtained for all three sizes of screen 26.

### Example 2

Experiments similar to Example 1 were carried out, but with the downchute residue material being dried before processing, using a screen 26 with 20mm apertures.

Following mechanical screening (through a 500µm and a 210µm screen) the products were analysed by microscopy.

For the 500µm sample (ie material passing through a 500µm screen but retained on a 210µm screen, which is referred to as a -500µm +210µm fraction), data for filament length (in mm) was as follows:

| | |
|---|---|
| Maximum | 130 |
| Minimum | 0.03-0.12 |
| Average | 2.0 - 6.5 |

Data for filament diameter (in µm) was as follows:

| | |
|---|---|
| Maximum | 714 |
| Minimum | 11 |
| Average | 50-150 |
| Standard deviation | 114 |

For the 210µm sample (ie material passing through a 210µm screen, which is referred to as a -210µm fraction), data for filament length (in mm) was as follows:

| | |
|---|---|
| Maximum | 55-95 |
| Minimum | 0.15 |
| Average | 0.8-3.0 |

Data for filament diameter (in µm) was as follows:

| | |
|---|---|
| Maximum | 164 |
| Minimum | 8 |
| Average | 60-90 |
| Standard deviation | 27 |

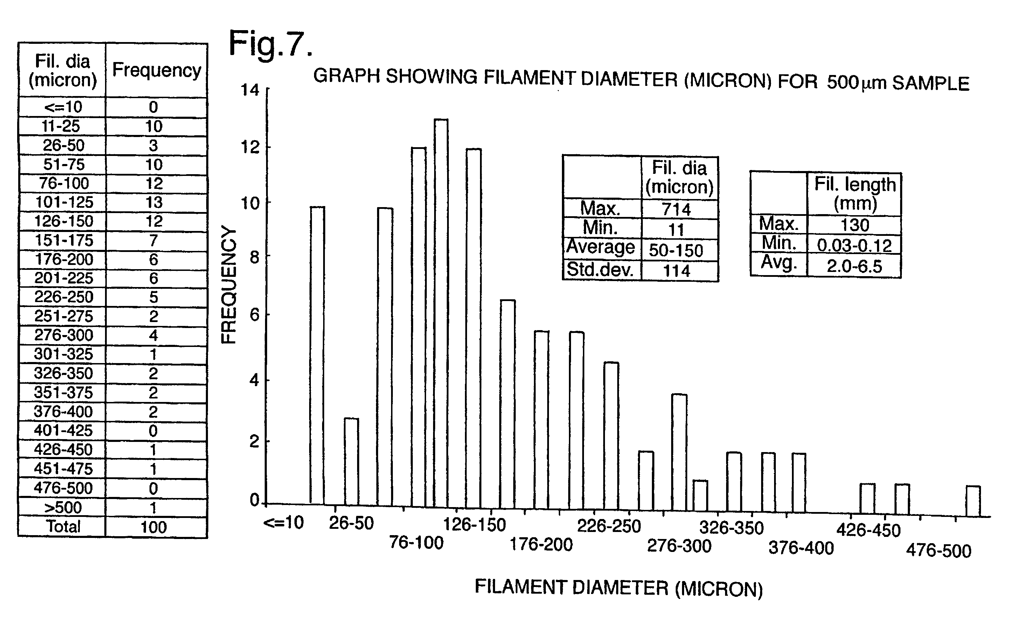

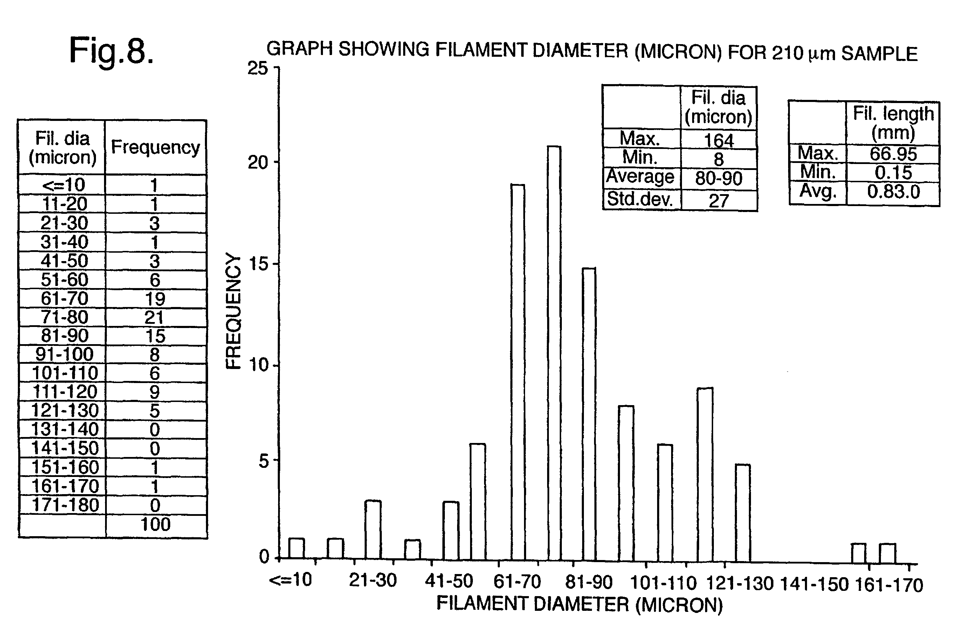

Figures 7 and 8 are graphs of filament diameter distribution for the 500µm and 210µm samples, respectively.

### Example 3

Experiments similar to Example 2 were carried out, with a further batch of E-glass downchute residue, dried before processing, using a screen 26 with 20mm circular apertures. The product was mechanically screened and the -500µm + 200µm fraction analysed by microscopy and details of the length and width (in µm) and aspect ratio of a randomly selected sample of monofilament fibres are given in the following Table.

| **Length (µm)** | **Width (µm)** | **Aspect Ratio** |
|---|---|---|
| 72.5 | 10.3 | 7.0 |
| 84.9 | 10.5 | 8.1 |
| 126.9 | 12 | 10.6 |
| 70.6 | 13.3 | 5.3 |
| 542.6 | 13.5 | 40.2 |
| 98.5 | 13.7 | 7.2 |
| 62.8 | 15.8 | 4.0 |
| 88 | 15.8 | 5.6 |
| 141 | 15.8 | 8.9 |
| 60.9 | 15.9 | 3.8 |
| 93.2 | 16 | 5.8 |
| 158.7 | 16.1 | 9.9 |
| 190.5 | 16:4 | 11.6 |
| 115.8 | 16.4 | 7.1 |
| 195.8 | 16.6 - | 11.8 |
| 137 | 17.1 | 8.0 |
| 179.8 | 17.3 | 10.4 |
| 290 | 18.4 | 15.8 |
| 290 | 18.4 | 15.8 |
| 321.7 | 18.5 | 17.4 |
| 80.8 | 19.2 | 4.2 |
| 84.9 | 19.6 | 4.3 |
| 267.6 | 19.7 | 13.6 |
| 106.4 | 20 | 5.3 |
| 180.3 | 20.3 | 8.9 |
| 88.2 | 20.6 | 4.3 |
| 123.2 | 21.1 | 5.8 |
| 277.6 | 21.3 | 13.0 |
| 1070 | 22.5 | 47.6 |
| 191.8 | 23.1 | 8.3 |
| 169.5 | 23.3 | 7.3 |
| 79 | 23.4 | 3.4 |
| 68.8 | 23.6 | 2.9 |
| 200.5 | 25.2 | 8.0 |
| 346 | 27.4 | 12.6 |
| 363.4 | 27.9 | 13.0 |
| 521.6 | 28 | 18.6 |
| 294.8 | 31.3 | 9.4 |
| 761.8 | 50.9 | 15.0 |
| 234.3 | 54.6 | 4.3 |
| 223.7 | 65 | 3.4 |
| 220.7 | 73 | 3.0 |
| 644.1 | 74.4 | 8.7 |
| 799.3 | 78 | 10.2 |
| 266.9 | 85.1 | 3.1 |
| 364.2 | 88.6 | 4.1 |
| 587.3 | 89 | 6.6 |
| 774.1 | 91 | 8.5 |
| 769.5 | 91.5 | 8.4 |
| 1068.6 | 94.3 | 11.3 |
| 418.6 | 94.7 | 4.4 |
| 740.7 | 99.2 | 7.5 |
| 1144.7 | 103.2 | 11.1 |
| 768.5 | 104.3 | 7.4 |
| 355.3 | 105 | 3.4 |
| 1395.3 | 109.2 | 12.8 |
| 190.6 | 113.8 | 1.7 |
| 377.8 | 116.1 | 3.3 |
| 410.5 | 116.5 | 3.5 |
| 624.1 | 124.4 | 5.0 |
| | Average Aspect Ratio | 9.2 |

### Example 4

Experiments similar to Example 3 were carried out, but with the E-glass downchute residue processed in wet condition. Fibre analysis results are given in the following Table.

| **Length (µm)** | **Width (µm)** | **Aspect Ratio** |
|---|---|---|
| 893.1 | 68 | 13.1 |
| 616.9 | 79.7 | 7.7 |
| 445.6 | 78.1 | 5.7 |
| 405.5 | 75.9 | 5.3 |
| 331.3 | 89 | 3.7 |
| 158.5 | 93.6 | 1.7 |
| 161 | 70.8 | 2.3 |
| 184.9 | 85 | 2.2 |
| 240.1 | 64 | 3.8 |
| 594.8 | 9.2 | 64.7 |
| 324.6 | 80.1 | 4.1 |
| 282.4 | 46.1 | 6.1 |
| 159.8 | 16.8 | 9.5 |
| 1019.9 | 12.8 | 79.7 |
| 251.9 | 70.2 | 3.6 |
| 180.5 | 91.6 | 2.0 |
| 1092.2 | 90.3 | 12.1 |
| 608.7 | 134.4 | 4.5 |
| 134.9 | 23.2 | 5.8 |
| 302.3 | 100.9 | 3.0 |
| 519.4 | 38.7 | 13.4 |
| 77.8 | 18.3 | 4.3 |
| 74.1 | 30 | 2.5 |
| 838.1 | 120 | 7.0 |
| 223 | 25.7 | 8.7 |
| 459.5 | 108.6 | 4.2 |
| 220.6 | 53.7 | 4.1 |
| 458.2 | 31 | 14.8 |
| 687.2 | 85.9 | 8.0 |
| 480.9 | 110.6 | 4.3 |
| 552.5 | 102.6 | 5.4 |
| 72 | 51.9 | 1.4 |
| 598.9 | 82.6 | 7.3 |
| 130.9 | 33.7 | 3.9 |
| 412.5 | 94.7 | 4.4 |
| 134 | 49.9 | 2.7 |
| 348 | 95.5 | 3.6 |
| 923.5 | 106.8 | 8.6 |
| 498.9 | 98.7 | 5.1 |
| 231.6 | 94.6 | 2.4 |
| 608.3 | 81.5 | 7.5 |
| 424.7 | 74.2 | 5.7 |
| 751.6 | 26.2 | 28.7 |
| 991.3 | 17.7 | 56.0 |
| 114.7 | 13 | 8.8 |
| 550.4 | 77.8 | 7.1 |
| 350.1 | 33.7 | 10.4 |
| 187 | 11.3 | 16.5 |
| 715.9 | 73.6 | 9.7 |
| 201.1 | 16 | 12.6 |
| 187 | 11.3 | 16.5 |
| 110.9 | 19.8 | 5.6 |
| 78.5 | 7.5 | 10.5 |
| 985.5 | 86.4 | 11.4 |
| 311.9 | 27.7 | 11.3 |
| 1127 | 42.1 | 26.8 |
| 860.2 | 114.4 | 7.5 |
| 637.3 | 87 | 7.3 |
| 188.4 | 91.9 | 2.1 |
| 975.3 | 101.6 | 9.6 |
| | Average Aspect Ratio | 10.5 |

### Example 5

Experiments similar to Examples 3 and 4 were carried out, but with processing being performed on a mixture of wet and dry E-glass downchute residue. Fibre analysis results are given in the Table below.

| **Length (µm)** | **Width (µm)** | **Aspect Ratio** |
|---|---|---|
| 267.2 | 10.6 | 25.2 |
| 81.4 | 11.8 | 6.9 |
| 97.5 | 13.6 | 7.2 |
| 173.7 | 14.3 | 12.1 |
| 182 | 14.6 | 12.5 |
| 161.8 | 14.8 | 10.9 |
| 152.6 | 15.4 | 9.9 |
| 108.9 | 15.6 | 7.0 |
| 151.8 | 15.8 | 9.6 |
| 388.9 | 16.8 | 23.1 |
| 155.2 | 17 | 9.1 |
| 423.7 | 17.1 | 24.8 |
| 794.7 | 18.6 | 42.7 |
| 433.8 | 24.8 | 17.5 |
| 1135.4 | 24.9 | 45.6 |
| 74.4 | 28.4 | 2.6 |
| 252.8 | 29.7 | 8.5 |
| 223.8 | 32 | 7.0 |
| 213.6 | 32.6 | 6.6 |
| 659 | 47.7 | 13.8 |
| 578.3 | 61.5 | 9.4 |
| 690.3 | 79.8 | 8.7 |
| 687.9 | 80.2 | 8.6 |
| 442.5 | 80.4 | 5.5 |
| 1512.9 | 83.7 | 18.1 |
| 1145.4 | 83.9 | 13.7 |
| 547.3 | 84.5 | 6.5 |
| 819.9 | 87 | 9.4 |
| 680.9 | 87.1 | 7.8 |
| 1503 | 87.7 | 17.1 |
| 513.9 | 89.3 | 5.8 |
| 514.8 | 90.4 | 5.7 |
| 552.7 | 91.7 | 6.0 |
| 235.4 | 92.7 | 2.5 |
| 236.2 | 92.8 | 2.5 |
| 788.2 | 93.8 | 8.4 |
| 485.4 | 94.3 | 5.1 |
| 385 | 94.5 | 4.1 |
| 188.5 | 95.4 | 2.0 |
| 497 | 95.7 | 5.2 |
| 814.9 | 96.2 | 8.5 |
| 903.2 | 97.3 | 9.3 |
| 414.4 | 97.8 | 4.2 |
| 407 | 99.6 | 4.1 |
| 201.6 | 100 | 2.0 |
| 1191.3 | 101 | 11.8 |
| 731 | 101.9 | 7.2 |
| 653.7 | 104.5 | 6.3 |
| 793.5 | 106.5 | 7.5 |
| 982.1 | 108 | 9.1 |
| 430.3 | 109 | 3.9 |
| 331.8 | 109.9 | 3.0 |
| 674.4 | 109.9 | 6.1 |
| 1052.6 | 112.7 | 9.3 |
| 615.5 | 114.8 | 5.4 |
| 780.1 | 115.5 | 6.8 |
| 319.1 | 116.3 | 2.7 |
| 810.2 | 117.4 | 6.9 |
| 386.2 | 120.7 | 3.2 |
| 627.1 | 156.5 | 4.0 |
| | Average Aspect Ratio | 9.6 |

### Example 6

A series of experiments similar to Example 3 were carried out, with different batches of E-glass downchute residue. The products were analysed by microscopy and details of the length and width (in µm) and aspect ratio of a randomly selected sample of monofilament fibres were determined. Seven different batches of downchute residue (samples 1 to 7) were obtained at weekly intervals from a commercial glass fibre production line, and details of the fibre analysis results are as follows:

### Sample 1

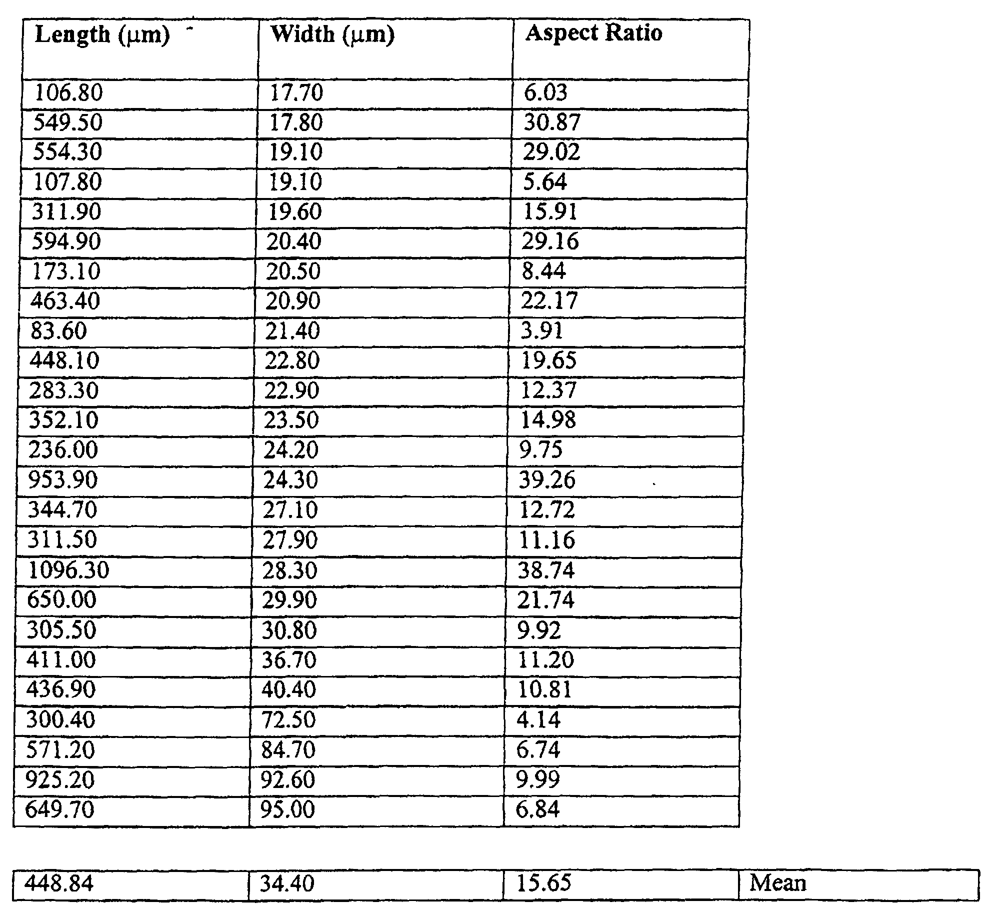

### Sample 2

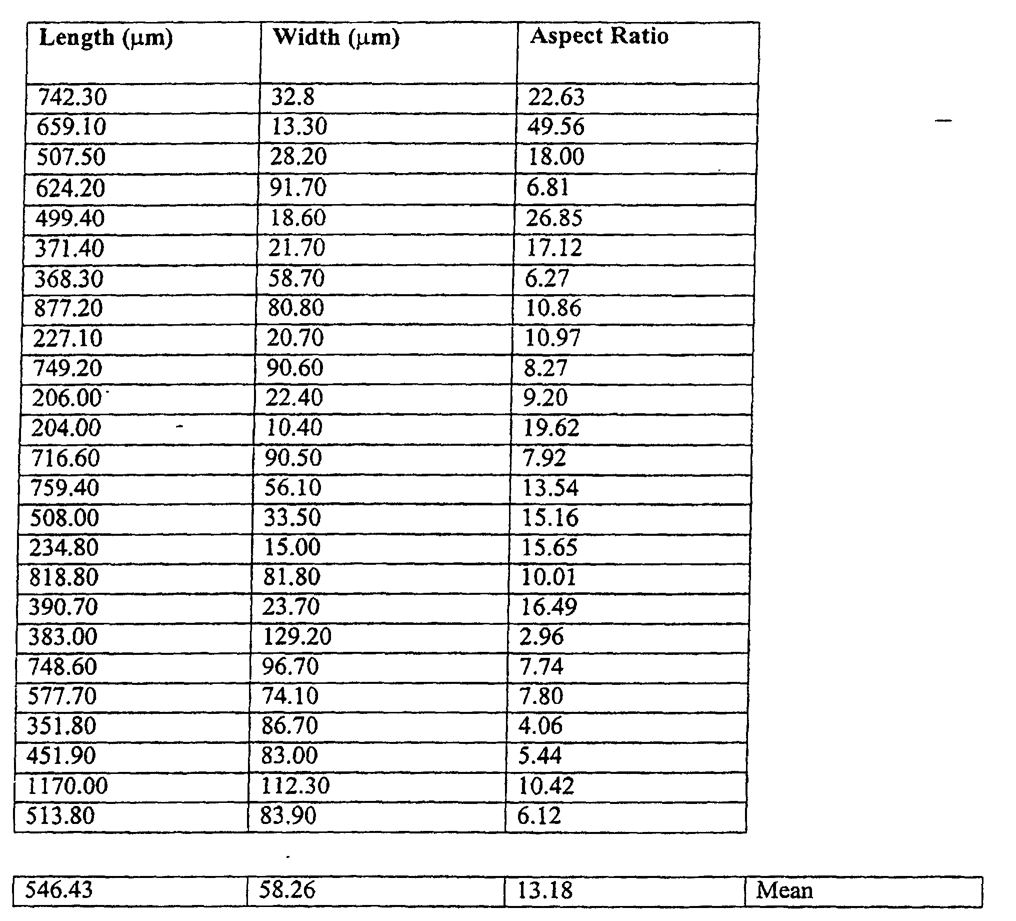

### Sample 3

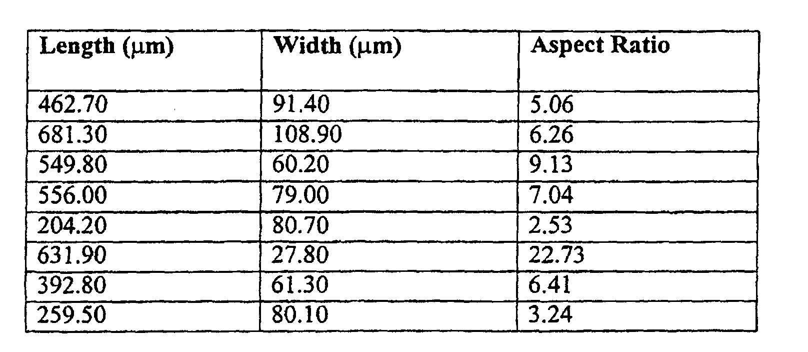

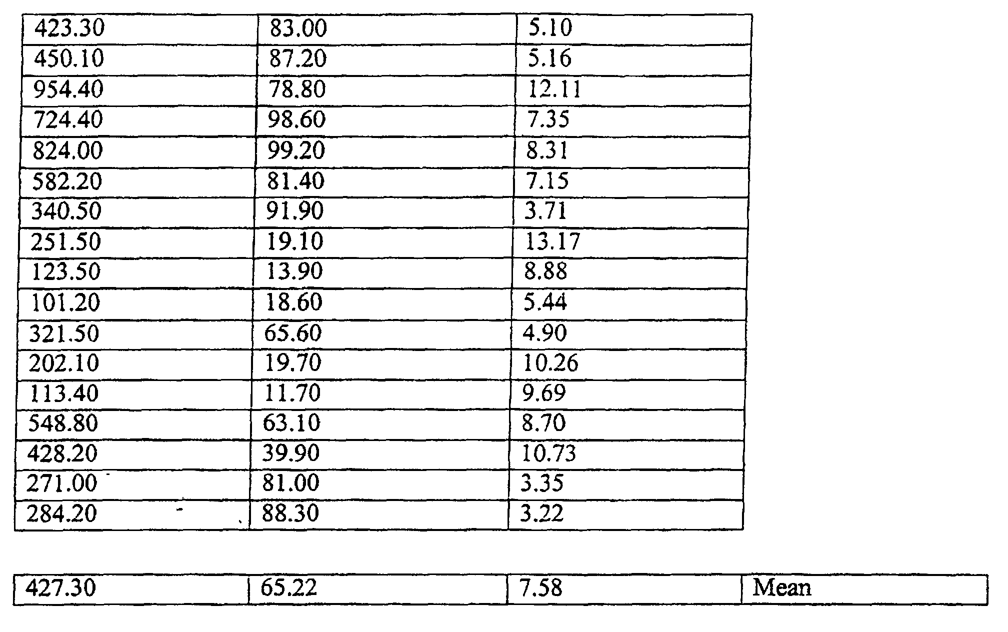

### Sample 4

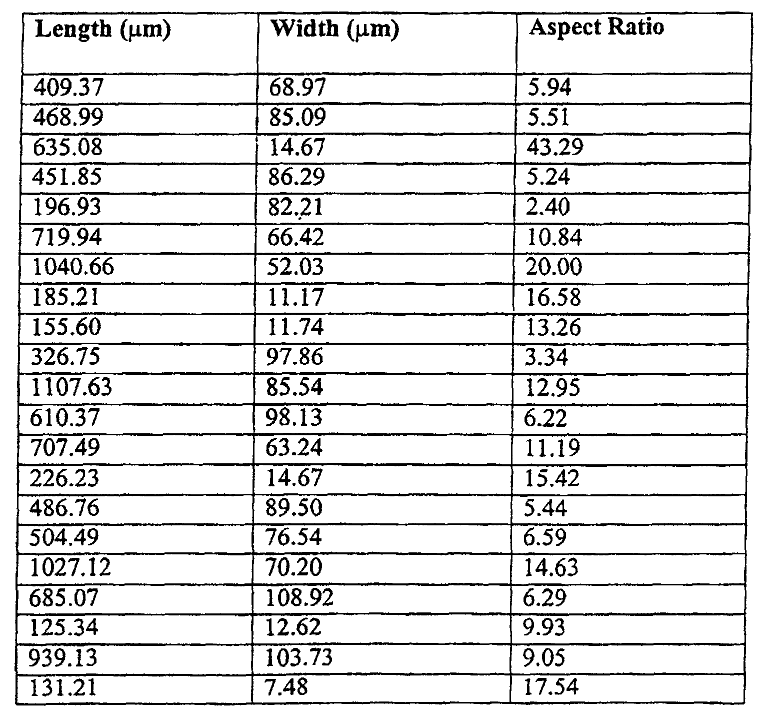

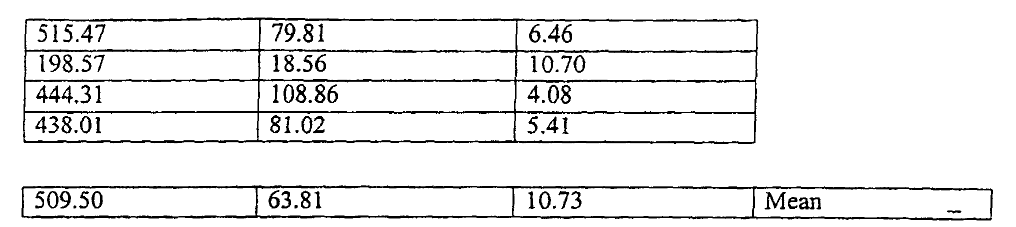

### Sample 5

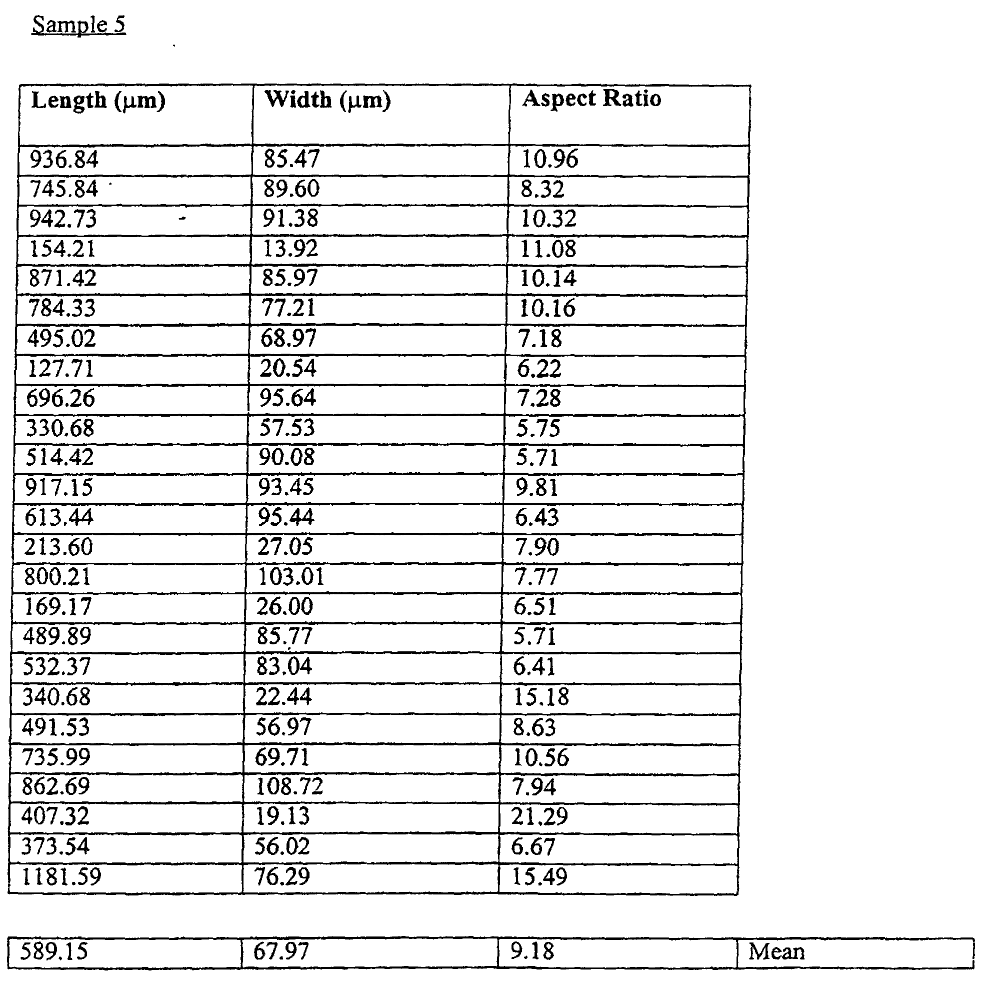

### Sample 6

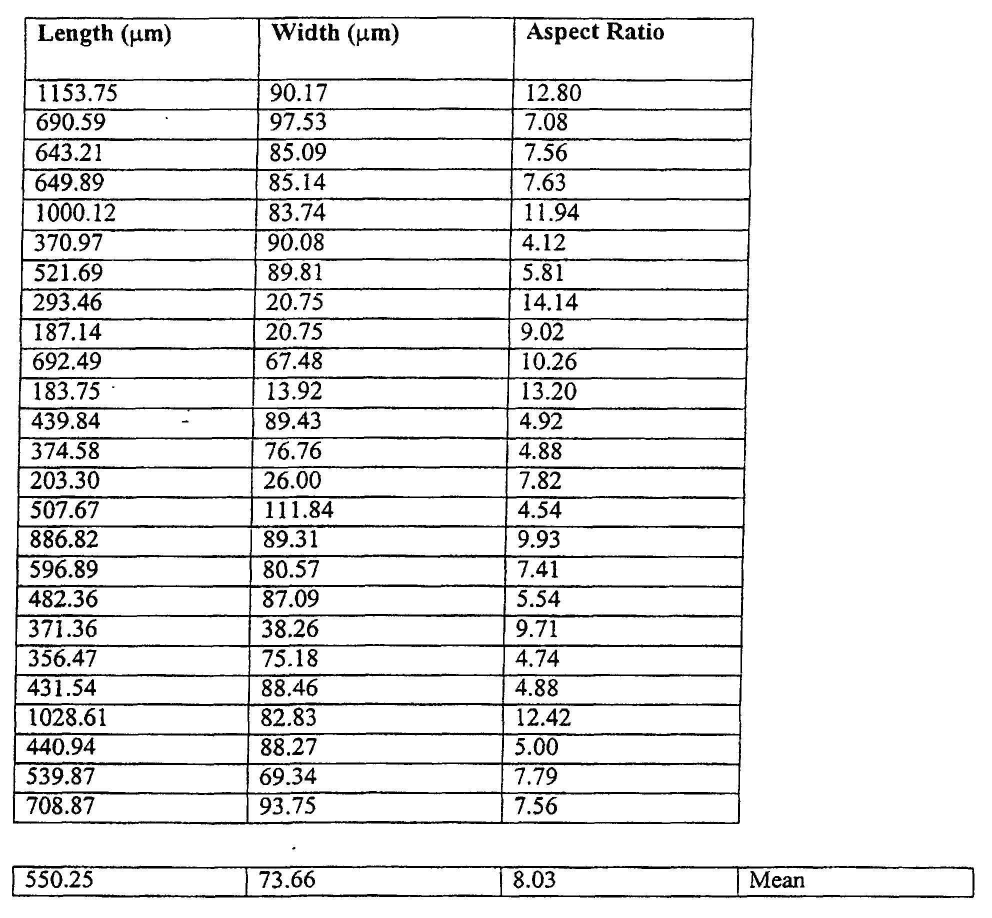

### Sample 7

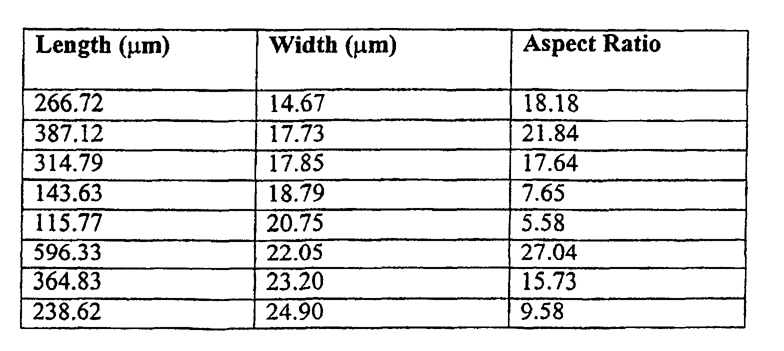

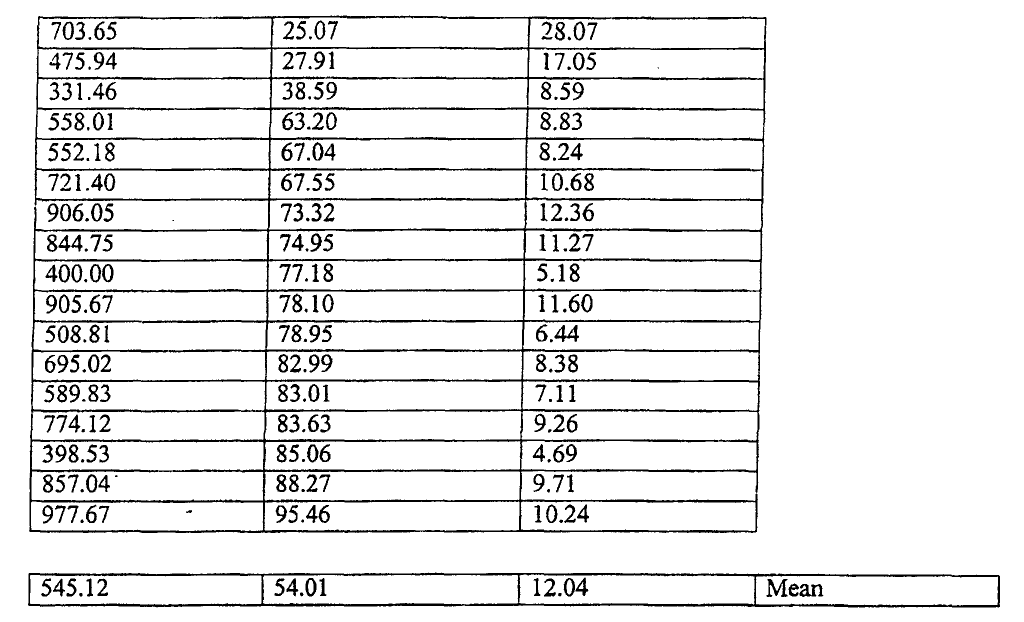

The dimensional differences in the different samples reflect the natural variability of the downchute residue feedstock.

### Example 7

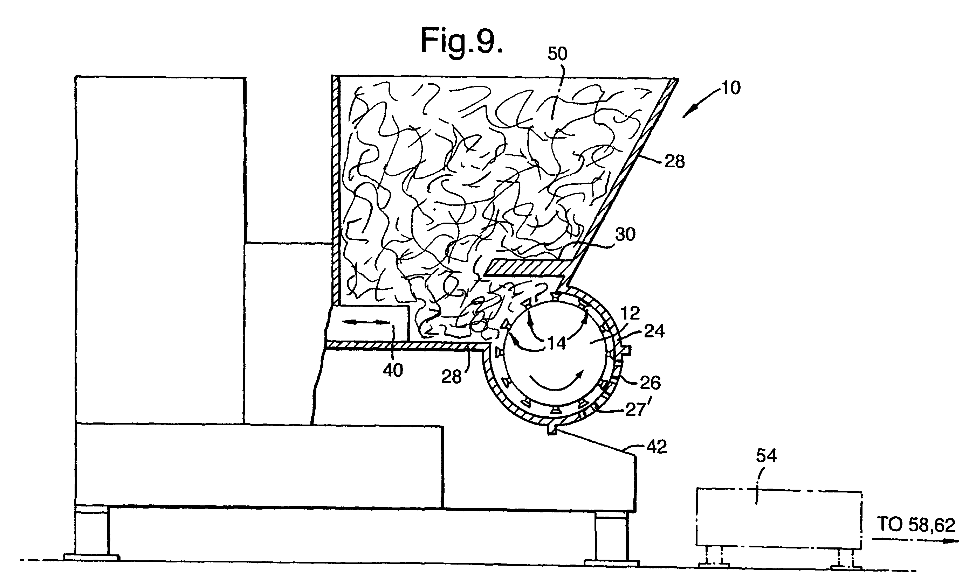

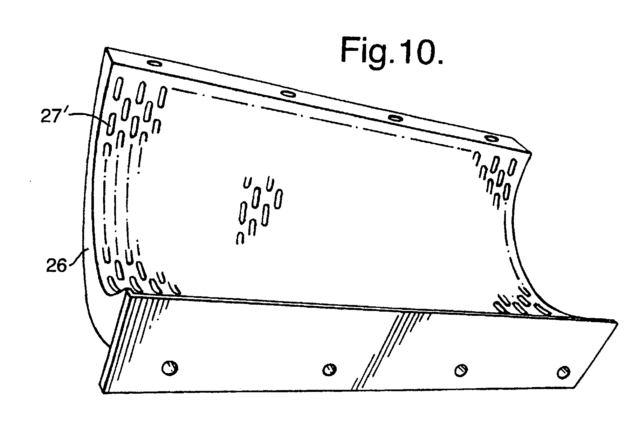

It has been discovered that the primary size-reduction mechanism is via a threshing action in which the glass fibre strands are picked up by the shaft 12 and effectively threshed against the screen 26. The force created by this threshing impact is sufficient to produce brittle fracture to the ends of the glass fibre strands, which then fall through the screen. Given this mechanism it thus transpires that a round-hole screen (as in the embodiment of Figures 1 to 5) is not the optimum configuration for the production of rigid monofilament fibres in accordance with the invention. The optimum configuration is found to be a screen with holes in the form of elongate generally parallel-sided slots or slits, with a tapering gap between housing 24 (including screen 26) and the protruberances 14 of the shaft 12, with the gap being widest adjacent the base of portion 28 and reducing in width in an anticlockwise direction as shown in Figure 1. Figures 9 and 10 illustrate a modified version of the apparatus of Figure 1 incorporating a screen 26 in which the apparatus of Figure 1 in the form of elongate slots 27', as shown in Figure 10. The maximum gap between the upper surfaces of the protruberances 14 and the screen 26 is about 13mm, with the gap tapering gradually and reducing to about 3mm. The minimum gap size affects product output rate but not the nature of the product. With such apparatus it has been found that the dimensions of the slot-shaped apertures 27', particularly the length, affect the maximum length of the resulting monofilament fibres. The apertures 27' should have a width greater than 1mm for reasonable performance, but otherwise slot width appears not to be critical and not significantly to affect the length of the resulting monofilament fibres. A slot width of 5mm is generally suitable. Experiments indicate slot density in screen 26 affects throughput but not product length. Suitable slot dimensions and density can be readily be determined by experiment for particular feed material and desired product characteristics.

Experiments were performed using the apparatus of Figures 9 and 10 using respective screens with slots 280mm and 20mm in length, the slots in both cases being 5mm wide, for processing E-glass downchute residue, dried before processing. The products as produced, ie without screening, were analysed by microscopy and details of the length (in mm) of a small randomly selected sample of monofilament fibres are as follows, showing the potential to regulate fibre length by varying slot length.

| **Slot Length 280mm Fibre Length (mm)** | **Slot Length 20mm Fibre Length (mm)** |
|---|---|
| 108 | 65 |
| 121 | 55 |
| 120 | 92 |
| 100 | 109 |
| 172 | 92 |
| 47 | 93 |
| 102 | 105 |
| 91 | 88 |
| 138 | 76 |
| 198 | 86 |
| 141 | 71 |
| 75 | 88 |
| 87 | 73 |
| 95 | 68 |
| 90 | 112 |
| 96 | 70 |
| 79 | 102 |
| 1131 | 69 |
| 90 | 95 |
| 107 | 110 |
| 67 | 85 |
| 113 | 65 |
| 91 | 108 |
| 78 | 110 |
| 157 | 115 |
| 81 | 100 |
| 109 | 57 |
| 193 | 104 |
| 70 | 100 |
| 113 | 151 |

Further experiments were carried out to investigate uses of rigid monofilament fibres in accordance with the invention.

### Example 8

Plastics composite materials were prepared by a standard compounding technique involving batch mixing in a Z-blade type mixer from dough moulding compound (DMC) including chopped strand glass fibre (control samples). In some samples (samples in accordance with the invention), 20% by weight of the chopped strand glass fibre content was replaced by the same weight of rigid monofilament glass fibres in accordance with the invention, prepared as described in Example 2. A -500µm +210µm fraction was used, the monofilament fibres of which have an average aspect ratio of 10.4. This fibrous material is referred to as a grade A material. The strength of the resulting composite materials were tested, and no significant difference was observed. Results were as follows:

| | Control | Invention |
|---|---|---|
| Flexural strength (MPa) | 64.0 | 61.7 |
| Flexural modulus (GPa) | 10.7 | 11.0 |
| Impact Strength (KJ/mm²) | 28.1 | 23.7 |

### Example 9

Similar dough moulding compound (DMC) to that of Example 8 was prepared but with unwashed fibres, produced in accordance with Example 2, replacing all the chopped strand glass fibre. Two types of monofilament fibres in accordance with the invention were used: grade A material as described above, and similar material but in the form of a -210µm fraction, which has an average aspect ratio of 11.2 and which is referred to as grade B material. It was found that good dispersion of the fibres was achieved during mixing and that two to three times the standard amount of glass could be incorporated whilst achieving the correct compound consistency without the need for thickening agents. Such compounds processed similarly to typical DMC and produced well-consolidated mouldings with good surface finish.

The Flexural Modulus (GPa) of a range of compounds produced with loadings of grade A and grade B monofilament fibres in accordance with the invention 2x and 3x (by weight) standard glass loadings were:

| | | | |
|---|---|---|---|
| 2xA | 13.39 | 3xA | 13.35 |
| 2xB | 12.95 | 3xB | 15.05 |

These values are generally higher than those observed with conventional DMC.

### Example 10

Monofilament fibres produced in accordance with Example 2 (grade A material and grade B material as discussed above) were compounded with polypropylene by standard compounding techniques. The glass loading was limited to 40% by weight. The fibres blended with the polymer easily and visual inspection indicated satisfactory dispersion. Tensile, impact and flexural strength measurements were similar to that of commercial grades of talc filled polypropylene.

### Example 11

Epoxy resin coating compositions based on proprietary products were prepared, with some of the samples including 10% by weight, based on the total weight of the resin composition, of fine grade glass fibres in accordance with the invention, prepared as described in Example 2 (grade B material). The coatings were painted onto test panels to provide coatings of a thickness as used in conventional floor coating treatments.

The panels coated with resin alone (control samples) and resin with glass fibres (samples in accordance with the invention) were tested for slip resistance properties on addition of water, oil and oil and water together.

The test method involves the preparation of a small skid block to which is attached a rubber pad. The skid block is then pulled over the test surface attached to a spring weight which measures the force required to move the skid block.

Each test was repeated three times and on each occasion the same result was achieved. The results normalised to unity for the control with oil are set out below:

| | Dry | Water | Oil | Water & Oil |
|---|---|---|---|---|
| Invention | 2.67 | 2.33 | 1.33 | 1.20 |
| Control | 1.20 | 1.00 | 1.00 | 1.00 |

### Example 12

A proprietary polyester resin had added thereto 60% by weight, based on the weight of the resin, of glass fibres in accordance with the invention, prepared as described in Example 2 (grade A material). The resin and fibres were thoroughly mixed and formed into a solid shape by cold casting in a simple mould. After curing, the moulding was dropped 5 times from a height of 10m onto a hard surface, without breaking.

### Example 13

A 1:1 by weight mix of polyester resin and fibres produced in accordance with Example 2 (grade A material). A standard catalyst was added, the mixtures poured into a open mould and allowed to cure at room temperature. The glass mixed readily, producing a free-flowing compound. The glass in this premix was found to stay in suspension for several days with very little tendency to settle out. The incorporation of the glass produced a significant improvement in stiffness of the cured casting, with an almost twofold increase in flexural modulus. Additional benefits accrued from reduced shrinkage increased dimensional stability at elevated temperature and surface hardness.

## Claims

1. Glass fibre material in the form of rigid monofilament fibres, at least 50% of the monofilament fibres having an aspect ratio of less than 30.

2. Glass fibre material according to claim 1, wherein at least 80% of the monofilament fibres have an aspect ratio of less than 30.

3. Glass fibre material according to claim 1 or 2, wherein the average aspect ratio of the monofilament fibres is less than 20.

4. Glass fibre material according to claim 1, 2 or 3, wherein at least 30% of the monofilament fibres have a diameter greater than about 30µm.

5. Glass fibre material according to claim 4, wherein at least 50% of the monofilament fibres have a diameter greater than about 30µm.

6. Glass fibre material according to claim 4 or 5, wherein no more than 40% of the monofilament fibres have a diameter less than about 20µm.

7. Glass fibre material according to any one of the preceding claims, wherein at least 75% of the monofilament fibres have a length in the range 0.1 to 6.5mm.

8. A product comprising glass fibre in accordance with any one of claims 1 to 7.

9. A product according to claim 8, comprising a plastic composite material, polymeric concrete or cement.

10. A product according to claim 8, comprising a coating material.

## Patentansprüche

1. Glasfasermaterial in Form von steifen Monofilamentfasern, wobei mindestens 50% der Monofilamentfasern ein Aspektverhältnis von weniger als 30 aufweisen.

2. Glasfasermaterial gemäß Anspruch 1, wobei mindestens 80% der Monofilamentfasern ein Aspektverhältnis von weniger als 30 aufweisen.

3. Glasfasermaterial gemäß Anspruch 1 oder 2, wobei das durchschnittliche Aspektverhältnis der Monofilamentfasern weniger als 20 beträgt.

4. Glasfasermaterial gemäß Anspruch 1, 2 oder 3, wobei mindestens 30% der Monofilamentfasern einen Durchmesser von mehr als etwa 30 µm aufweisen.

5. Glasfasermaterial gemäß Anspruch 4, wobei mindestens 50% der Monofilamentfasern einen Durchmesser von mehr als etwa 30 µm aufweisen.

6. Glasfasermaterial gemäß Anspruch 4 oder 5, wobei nicht mehr als 40% der Monofilamentfasern einen Durchmesser von weniger als etwa 20 µm aufweisen.

7. Glasfasermaterial gemäß irgendeinem der vorhergehenden Ansprüche, wobei mindestens 75% der Monofilamentfasern eine Länge im Bereich von 0,1 bis 6,5 mm aufweisen.

8. Produkt, umfassend eine Glasfaser gemäß irgendeinem der Ansprüche 1 bis 7.

9. Produkt gemäß Anspruch 8, umfassend ein plastisches Verbundmaterial, einen polymeren Beton oder Zement.

10. Produkt gemäß Anspruch 8, umfassend ein Beschichtungsmaterial.

## Revendications

1. Matériau en fibre de verre sous forme de fibres monofilaments rigides, au moins 50 % des fibres monofilaments possédant un rapport de longueur inférieur à 30.

2. Matériau en fibre de verre selon la revendication 1, dans lequel au moins 80 % des fibres monofilaments ont un rapport de longueur inférieur à 30.

3. Matériau en fibre de verre selon la revendication 1 ou 2, dans lequel le rapport de longueur moyen des fibres monofilaments est inférieur à 20.

4. Matériau en fibre de verre selon la revendication 1, 2 ou 3, dans lequel au moins 30 % des fibres monofilaments ont un diamètre supérieur à environ 30 µm.

5. Matériau en fibre de verre selon la revendication 4, dans lequel au moins 50 % des fibres monofilaments ont un diamètre supérieur à environ 30 µm.

6. Matériau en fibre de verre selon la revendications 4 ou 5, dans lequel pas plus de 40 % des fibres monofilaments ont un diamètre inférieur à environ 20 µm.

7. Matériau en fibre de verre selon l'une quelconque des revendications précédentes, dans lequel au moins 75 % des fibres monofilaments ont une longueur comprise entre 0,1 et 6,5 mm.

8. Produit comprenant une fibre de verre selon l'une quelconque des revendications 1 à 7.

9. Produit selon la revendication 8, comprenant un matériau composite plastique, béton ou ciment polymère.

10. Produit selon la revendication 8, comprenant un matériau de revêtement.
